# EUROPEAN PATENT SPECIFICATION

(11) **EP 4 567 288 B1**
(45) Date of publication and mention of the grant of the patent: **29.07.2026**
(21) Application number: 23214464.2
(22) Date of filing: 05.12.2023
(51) Int. Cl.: F16B 25/10, F16B 35/06, F16B 25/00

(54) **SCREW**
SCHRAUBE
VIS

(43) Date of publication of application: 11.06.2025
(73) Proprietor: Taiwan Shan Yin International Co., Ltd., Kaohsiung City 82059 (TW)
(72) Inventor: Su, Kou-Tsair, 806 Kaohsiung City (TW); Su, Chen-Long, 800 Kaohsiung City (TW)
(74) Representative: Cabinet Chaillot

(56) References cited:
- EP-A1- 3 225 858
- EP-B1- 4 134 557
- CN-A- 115 199 628
- US-A1- 2017 016 467

## Description

### BACKGROUND OF THE INVENTION

### 1. Field of the Invention

This invention relates to a screw and relates particularly to a screw capable of quickly moving chips outwards, attaining a tight engagement with a workpiece, reducing the screwing resistance, and improving the cutting efficiency and the pull-out resistance whereby the screw is not easily pulled out of the workpiece.

### 2. Description of the Related Art

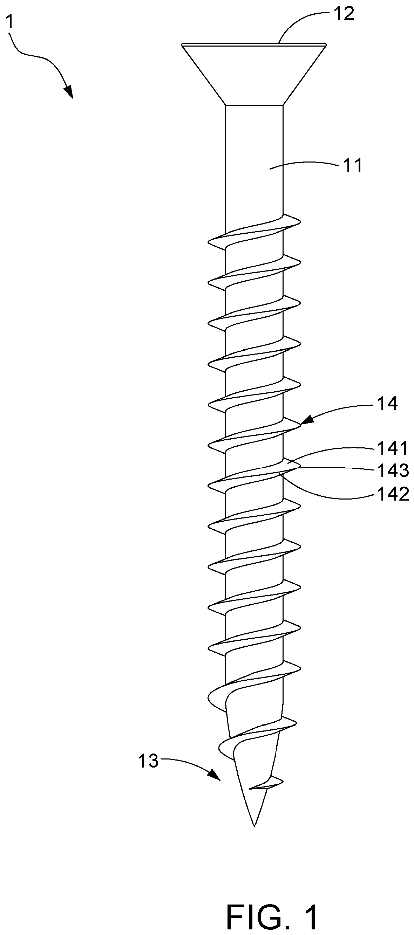

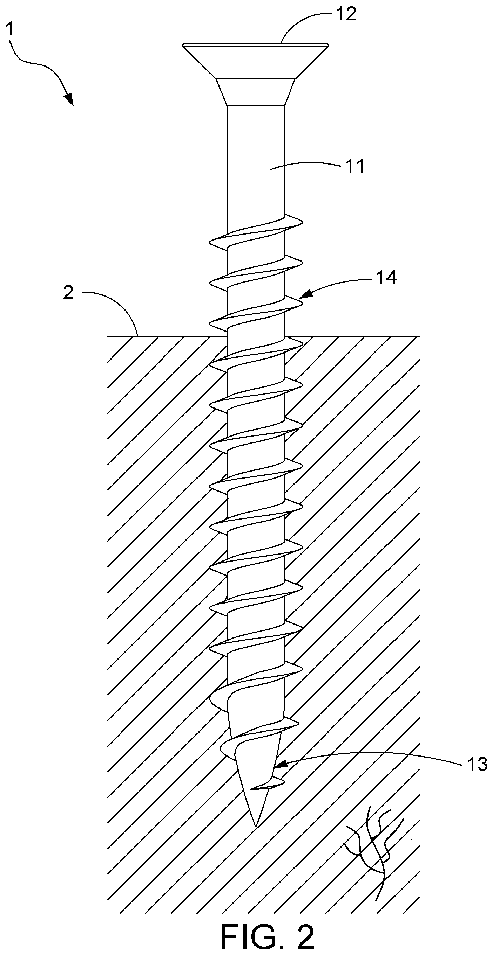

Referring to Figs. **1** and **2****,** a conventional screw **1** comprises a shank **11** having a first end and a second end opposite to the first end, a head **12** disposed on the first end of the shank **11,** a drill portion **13** disposed on the second end of the shank **11,** and a plurality of thread convolutions **14** spirally disposed on the shank **11** between the first end and the second end. Each thread convolution **14** has an upper thread flank **141** extending outwards from the shank **11** and facing the head **12,** a lower thread flank **142** extending outwards from the shank **11** and facing the drill portion **13,** and a thread crest **143** formed along a junction of the upper thread flank **141** and the lower thread flank **142.** During a screwing operation, the drill portion **13** is situated at a surface of a workpiece **2.** A rotational force is applied on the head **12** to carry out a drilling operation of the drill portion **13.** The thread convolutions **14** then cut into the workpiece **2** to further screw the screw **1** into workpiece **2** gradually so that the screwing operation is completed.

However, spaces provided by the screw **1** for accommodating and excluding chips are not enough. Chips generated during the screwing operation cannot be moved outwards timely, and that will increase the screwing resistance and reduce the screwing speed when the screw **1** keeps screwing downwards and pressing the accumulated chips. If the screw **1** keeps pressing the chips, the workpiece **2** may crack. Meanwhile, the screw **1** cannot hold the chips sufficiently, and that will result in poor engagement between the screw **1** and the workpiece **2.** Thus, the pull-out resistance of the screw **1** is not good, and the screw 1 may be easily pulled out of the workpiece **2.** Further, the upper thread flank **141** and the lower thread flank **142** extend by the same inclined angle and converge at the thread crest **143** whereby the thread convolutions **14** are provided with a symmetrical arrangement. The symmetrical arrangement of the thread convolutions **14** is incapable of cutting into the workpiece **2** effectively, and that requires to be improved.

EP4134557B1 discloses a screw with multiple thread angles according to the preamble of Claim 1. Each thread convolution of the screw includes opposite first upper and lower flank sections defining a first thread angle which ranges between 70 degrees and 75 degrees, opposite second upper and lower flank sections defining a second thread angle which ranges between 37 degrees and 43 degrees, opposite third upper and lower flank sections defining a third thread angle which ranges between 20 degrees and 23 degrees, and a plurality of notches recessedly formed.

### SUMMARY OF THE INVENTION

The object of this invention is to provide a screw capable of improving cutting efficiency, attaining a tight engagement with a workpiece, providing enough spaces for chips accommodation and exclusion to thereby reduce screwing resistance and enhance pull-out resistance whereby the screw is not easily pulled out of the workpiece.

The screw of this invention is as defined in Claim 1 and comprises a shank having opposite first and second ends, a head formed on the first and, a drill portion formed on the second end, a plurality of thread convolutions spiraled on the shank and axially spaced apart, a plurality of ribs formed by projecting outwards from an outer periphery of the shank, and a discharging portion formed between any two adjacent ribs and defined on the outer periphery of the shank. The shank defines a central axis. The ribs extend between the thread convolutions in an extension direction which is non-parallel to the central axis of the shank. Each thread convolution has a first thread flank and a second thread flank respectively extending outwards from the shank and facing opposite directions. The first thread flank and the second thread flank converge at a thread crest which defines a baseline perpendicular to the central axis of the shank. The first thread flank and the shank connect at a first thread root. The second thread flank and the shank connect at a second thread root. A vertical distance defined between the first thread root and the baseline is different from a vertical distance defined between the second thread root and the baseline. Each first thread flank has a first flank section connected to the shank and a second flank section connected to the first flank section. A flank angle defined between the first flank section and the baseline is different from a flank angle defined between the second flank section and the baseline. A plurality of cutting portions are provided on respective thread crests corresponding to at least two thread convolutions. The discharging portion has an accommodation groove recessed into the outer periphery of the shank and extending between the thread convolutions and two guiding surfaces respectively connected between the accommodation groove and the ribs. Each guiding surface is inclined towards the central axis of the shank. The ribs and the cutting portions assist the thread convolutions in cutting, thereby increasing the cutting efficiency. Chips caused by cutting a workpiece are guided by the guiding surfaces into the accommodation groove to further move the chips outwards quickly, thereby reducing the screwing resistance, accelerating the screwing operation, and preventing the workpiece from cracking. Besides, the remaining chips are accommodated within the guiding surfaces, the accommodation groove, and the cutting portions after the screwing operation is complete, thereby attaining a tight engagement between the screw and the workpiece. Further, different vertical distances and different flank angles provide an asymmetric arrangement of the thread convolutions, thereby improving the cutting efficiency and cutting effect, allowing the screw to engage with the workpiece tightly, and increasing the pull-out resistance of the screw whereby the screw is not easily pulled out.

Preferably, the first thread flank of each thread convolution faces the head.

Preferably, the thread convolutions include a first plurality of thread convolutions and a second plurality of thread convolutions formed between the first plurality of thread convolutions. Each first thread flank of each first plurality of thread convolutions faces the head. Each first thread flank of each second plurality of thread convolutions faces the drill portion.

Preferably, the vertical distance defined between the first thread root and the baseline is greater than the vertical distance defined between the second thread root and the baseline.

Preferably, the flank angle defined between the first flank section and the baseline is greater than the flank angle defined between the second flank section and the baseline.

Preferably, the drill portion has a drill body connected to the second end of the shank and two opposite slots recessedly formed on the drill body. Each slot is communicated with each accommodation groove of each discharging portion, thereby guiding chips caused by cutting the workpiece into the accommodation groove with the aid of the two slots.

Preferably, each cutting portion has at least one first notch and a plurality of second notches formed on two sides of each first notch. Each first notch is recessed into the thread crest, thereby defining two cutting edges.

Preferably, the cutting portions are spaced from each other. Each first notch is curved in shape.

### BRIEF DESCRIPTION OF THE DRAWINGS

- Fig. **1**: is a schematic view showing a conventional screw;
- Fig. **2**: is a schematic view showing a screwing operation of the conventional screw;
- Fig. **3**: is a perspective view showing a first preferred embodiment of this invention;
- Fig. **3A**: is an enlarged view of the encircled portion A indicated in Fig. 3;
- Fig. **3B**: is an enlarged view of the encircled portion B indicated in Fig. 3;
- Fig. **4**: is a schematic view showing partial elements of the first preferred embodiment of this invention;
- Fig. **5**: is a cross-sectional view showing the ribs and the discharging portions;
- Fig. **6**: is a schematic view showing the first preferred embodiment of this invention;
- Fig. **6A**: is an enlarged view of the encircled portion C indicated in Fig. 6;
- Fig. **6B**: is an enlarged view of the encircled portion D indicated in Fig. 6;
- Fig. **7**: is a schematic view showing a screwing operation of the first preferred embodiment of this invention;
- Fig. **8**: is a schematic view showing a second preferred embodiment of this invention characterized by two slots of the drill portion;
- Fig. **9**: is a schematic view showing the second preferred embodiment of this invention;
- Fig. **9A**: is an enlarged views of the encircled portion E indicated in Fig. 9; and
- Fig. **10**: is a schematic view showing a screwing operation of the second preferred embodiment of this invention.

### DETAILED DESCRIPTION OF THE PREFERRED EMBODIMENTS

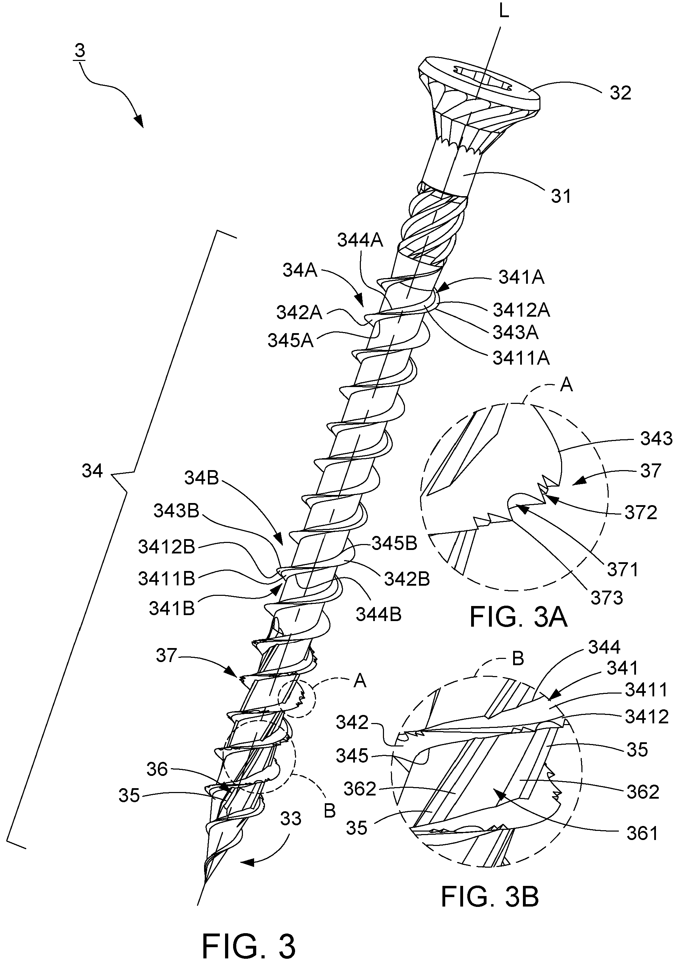

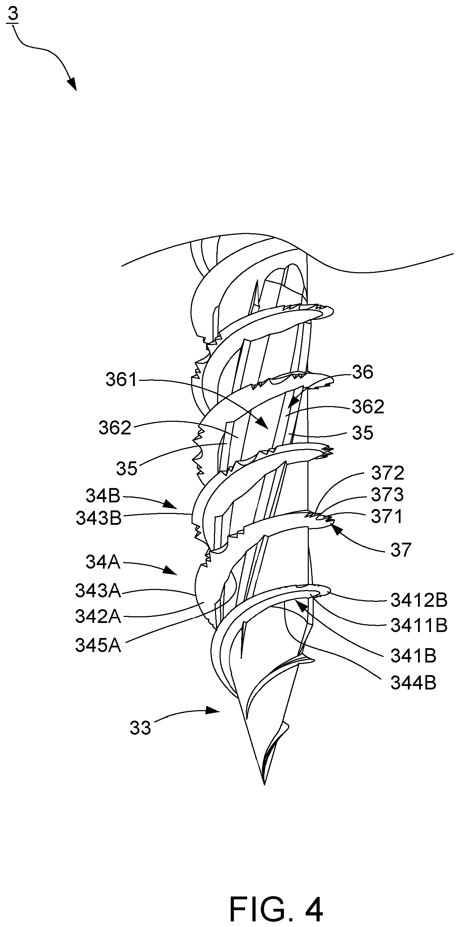

Referring to Figs. **3, 3A, 3B** and **4****,** a first preferred embodiment of a screw **3** of this invention is disclosed. The screw **3** includes a shank **31** having a first end and a second end opposite to the first end, a head **32** formed on the first end of the shank **31,** a drill portion **33** formed on the second end of the shank **31,** a plurality of thread convolutions **34** spirally formed on the shank **31** between the first end and the second end, and a plurality of ribs **35** formed by projecting outwards from an outer periphery of the shank **31.** The shank **31** defines a central axis **L.** The ribs **35** stretch between the thread convolutions **34** in an extension direction which is non-parallel to the central axis **L** of the shank **31.** A discharging portion **36** is formed between any two adjacent ribs **35** and defined on the outer periphery of the shank **31.** In this preferred embodiment, four ribs **35** are symmetrically arranged on the shank **31.** The type of the drill portion **33** can be varied according to needs such as a dill tail, a pointed tail, and so on. Here takes that the drill portion **33** is a pointed tail as an example.

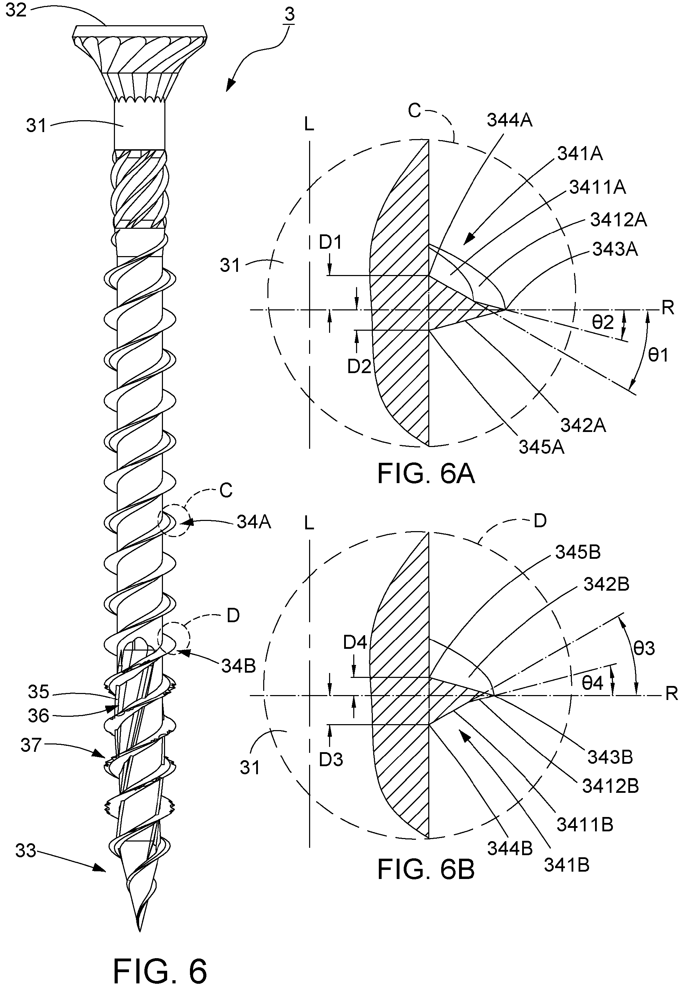

Each thread convolution **34** has a first thread flank **341** extending outwards from the shank **31,** a second thread flank **342** extending outwards from the shank **31** and facing a direction opposite to a direction of the first thread flank **341,** and a thread crest **343** formed at a convergence of the first thread flank **341** and the second thread flank **342.** A plurality of cutting portions **37** are formed on respective thread crests **343** corresponding to at least two thread convolutions **34** as shown in Figs. **3** and **3A****.** Referring to Figs. **6, 6A** and **6B****,** the thread crest **343** defines a baseline **R** which is perpendicular to the central axis **L** of the shank **31.** The first thread flank **341** and the outer periphery of the shank **31** meets at a first thread root **344.** The second thread flank **342** and the outer periphery of the shank **31** meets at a second thread root **345.** A vertical distance defined between the first thread root **344** and the baseline **R** is different from a vertical distance defined between the second thread root **345** and the baseline **R.** The first thread flank **341** of each thread convolution **34** has a first flank section **3411** connected to the shank **31** and a second flank section **3412** connected to the first flank section **3411.** A flank angle defined between the first flank section **3411** and the baseline **R** is different from a flank angle defined between the second flank section **3412** and the baseline **R.**

Referring to Figs. **3** and **4****,** in this preferred embodiment, the thread convolutions **34** include a first plurality of thread convolutions **34A,** also referred to herein, for simplicity, as "first threads **34A"** (for plural) or a "first thread **34A"** (for singular) . The thread convolutions **34** also include a second plurality of thread convolutions **34B,** also referred to herein, for simplicity, as "second threads **34B"** (for plural) or a "second thread **34B"** (for singular) . In short, the thread convolutions **34** can be divided into a plurality of first threads **34A** and a plurality of second threads **34B** formed between the first threads **34A.** The first threads **34A** and the second threads **34B** are formed on the shank **31** separately without connection so that to provide a double threaded screw **3.** Each first thread flank **341A** of each first thread **34A** faces the head **32.** Referring to the first threads **34A** shown in Figs. **6** and **6A****,** each second thread flank **342A** of each first thread **34A** faces the drill portion **33.** A reference line is defined between the first thread root **344A** of each first thread flank **341A** and the baseline **R.** The reference line is parallel to the central axis **L** of the shank **31.** The length of the reference line is defined as a first vertical distance **D1** in this preferred embodiment. Another reference line is also defined between the second thread root **345A** of each second thread flank **342A** and the baseline **R.** The reference line is parallel to the central axis **L** of the shank **31.** The length of the reference line is defined as a second vertical distance **D2** in this preferred embodiment. Preferably, the first vertical distance **D1** is larger than the second vertical distance **D2.** Following a third vertical distance **D3,** a fourth vertical distance **D4,** a fifth vertical distance **D5,** and a sixth vertical distance **D6** are defined by the length of respective reference line parallel to the central axis **L** of the shank **31.** The first thread flank **341A** of each first thread **34A** has a first flank section **3411A** connected to the first thread root **344A** and a second flank section **3412A** connected between the first flank section **3411A** and the thread crest **343A.** A first flank angle **01** is defined between the first flank section **3411A** and the baseline **R.** A second flank angle **θ2** is defined between the second flank section **3412A** and the baseline **R.** The first flank angle **01** is larger than the second flank angle **θ2**.

Referring to the second threads **34B** shown in Figs. **6** and **6B****,** the first thread flank **341B** of each second thread **34B** faces the drill portion **33.** The second thread flank **342B** of each second thread **34B** faces the head **32.** A third vertical distance **D3** is defined between the first thread root **344B** and the baseline **R.** A fourth vertical distance **D4** is defined between the second thread root **345B** and the baseline **R.** The third vertical distance **D3** can be larger than the fourth vertical distance **D4.** The first thread flank **341B** of each second thread **34B** has a first flank section **3411B** connected to the first thread root **344B** and a second flank section **3412B** connected between the first flank section **3411B** and the thread crest **343B.** A third flank angle **θ3** is defined between the first flank section **3411B** and the baseline **R.** A fourth flank angle **θ4** is defined between the second flank section **3412B** and the baseline **R.** The third flank angle **θ3** is larger than the fourth flank angle **θ4.**

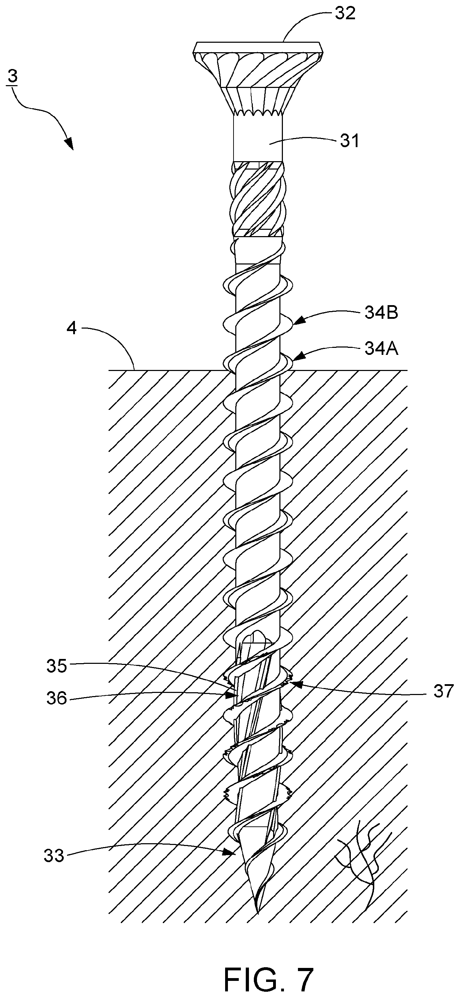

Because the vertical distance defined between each first thread root **(344, 344A, 344B)** and the baseline **R** is different from the vertical distance defined between each second thread root **(345, 345A, 345B)** and the baseline **R,** each first thread flank **(341, 341A, 341B)** and each second thread flank **(342, 342A, 342B)** respectively extend in different inclined angles whereby asymmetric thread flanks are provided. Meanwhile, the flank angle defined between each first flank section **(3411, 3411A, 3411B)** and the baseline **R** is different from the flank angle defined between each second flank section **(3412, 3412A, 3412B)** and the baseline **R,** thereby allowing each first thread flank **(341, 341A, 341B)** to be formed by a multi-sectional structure whereby asymmetric flank sections are provided. Thus, the asymmetric arrangement is advantageous to increase the cutting efficiency of the thread convolutions **34** (namely the first threads **34A** and the second threads **34B**), attain a tight engagement, and increase the pull-out resistance of the screw **3** after a screwing operation is complete. The improved pull-out resistance ensures that the screw **3** is not easily pulled out of a workpiece **4** as shown in Fig. **7****.**

Referring to Figs. **3, 3A** and **4****,** each discharging portion **36** has an accommodation groove **361** extending between the thread convolutions **34** and two guiding surfaces **362** respectively connected to two sides of the accommodation groove **361.** The two guiding surfaces **362** are also respectively connected to the two adjacent ribs **35** so that each guiding surface **362** is connected to one of the two adjacent ribs **35** and the accommodation groove **361.** Each accommodation groove **361** is recessed into the outer periphery of the shank **31.** The guiding surfaces **362** extend between the accommodation groove **361** and respective ribs **35.** Each guiding surface **362** stretches between two adjacent thread convolutions **34** in an extension direction which is non-parallel to the central axis **L** of the shank **31.**

Thus, chips generated during a cutting operation of the ribs **35** are guided by the guiding surfaces **362** into the accommodation groove **361,** and then moved outwards quickly. In this preferred embodiment, the cutting portions **37** are spaced from each other. Each cutting portion **37** has at least one first notch **371** and a plurality of second notches **372** formed on two sides of each first notch **371.** Each first notch **371** is recessed into the thread crest **343** to thereby form two cutting edges **373.** The first notch **371** of each cutting portion **37** is curved in shape in this preferred embodiment. Here takes an example that the second notches **372** are divided into groups. Each group includes two second notches **372** connected together. Each first notch **371** is defined between and connected to two groups of the second notches **372,** thereby forming the cutting edges **373** between the first notch **371** and the second notches **372** respectively.

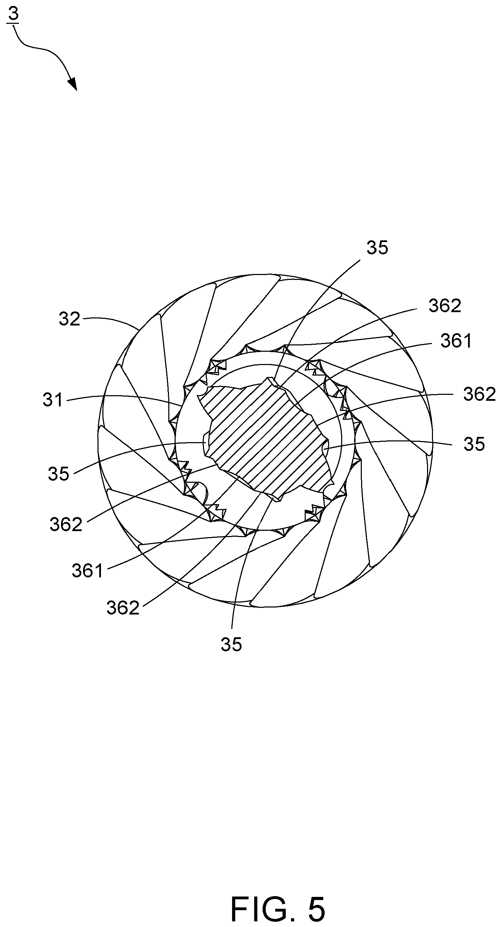

Referring to Figs. **3** to **7****,** during a screwing operation of the screw **3,** the drill portion **33** is positioned against a surface of a workpiece **4.** Then, the head **32** receives a rotational force in order to carry out a drilling operation of the drill portion **33** and a cutting operation of the thread convolutions **34** (namely the first threads 34A and the second threads **34B**) . During the cutting operation, the first notch **371,** the second notches **372** and the cutting edges **373** of each cutting portion **37** and the ribs **35** formed on the shank **31** can help sever fibers of the workpiece **4** into chips, thereby increasing the cutting efficiency. The chips are then guided by the guiding surfaces **362** which are formed on two sides of the ribs **35** into the accommodation groove **361,** and the chips are allowed to move outwards smoothly and speedily. The chips can also travel outwards quickly through the first notches **371** and the second notches **372.** Accordingly, the guiding surfaces **362,** the accommodation groove **361,** the second notches **372,** and the first notches **371** enlarge spaces for accommodating and excluding the chips, thereby moving the chips outwards effectively, lowering the screwing resistance, allowing the screw **3** to screw into the workpiece **4** speedily without being hindered by the chips, accelerating the screwing operation, and preventing the workpiece **4** from cracking caused by pressing unduly accommodated chips. The asymmetric arrangement of the thread convolutions **34** assists in enhancing the cutting efficiency, allowing the screw **3** to engage with the workpiece **4** tightly, and increasing the pull-out resistance after the screw **3** is screwed into the workpiece **4.** After the screw **3** is embedded in the workpiece **4,** the remainder of chips are received within the guiding surfaces **362,** the accommodation groove **361,** the second notches **372,** and the first notches **371** duly, thereby attaining a tight engagement between the screw **3** and the workpiece **4,** preventing the screw **3** from being easily pulled out of the workpiece **4,** and achieving preferable anti-loosening effect.

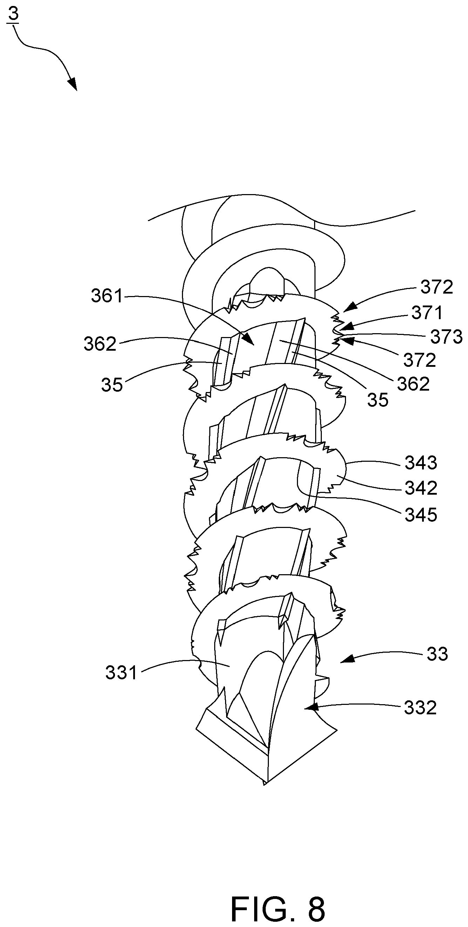

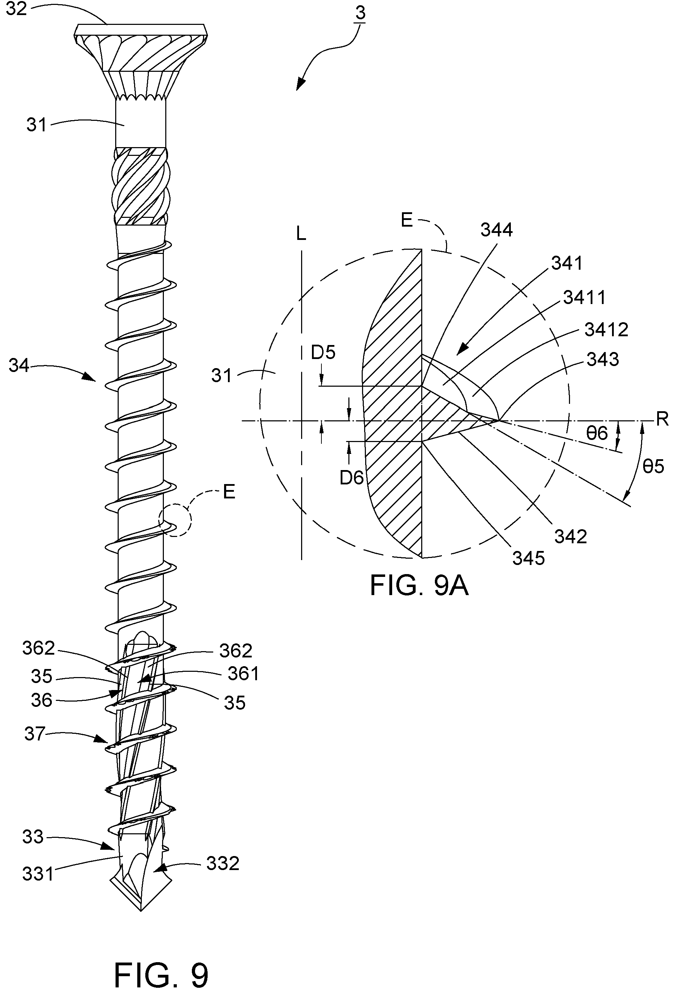

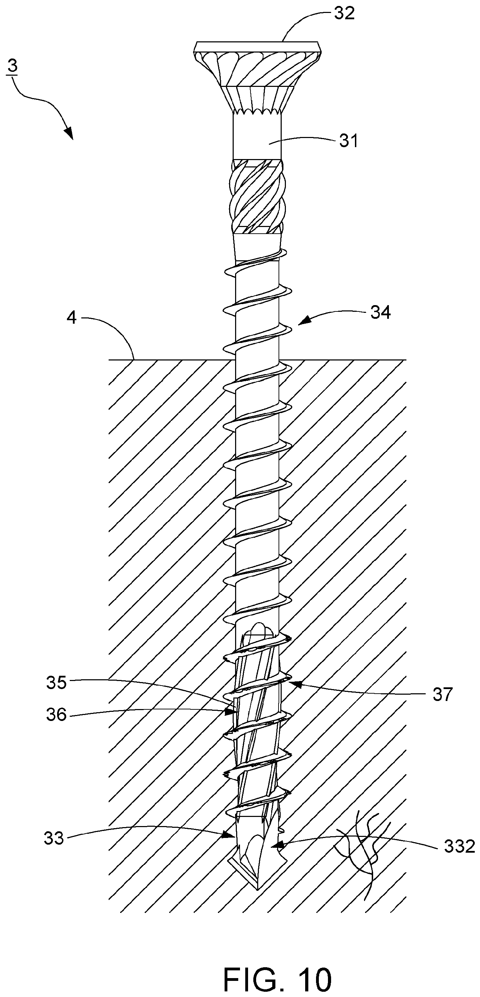

Referring to Figs. **8****,** **9****,** **9A** and **10** shows a second preferred embodiment of the screw **3** of this invention. The correlated elements and the concatenation of elements, the operation and objectives of the second preferred embodiment are the same as those of the first preferred embodiment. This embodiment is characterized in that the drill portion **33** has a drill body **331** connected to the second end of the shank **31** and two opposite slots **332** recessed into the drill body **331.** Each slots **332** is communicated with respective accommodation groove **361** of each discharging portion **36** whereby chips generated during a drilling operation of the drill portion **33** travel through the slots **332** into the accommodation groove **361** and move outwards smoothly. In this preferred embodiment, the screw **3** is a single threaded screw. Accordingly, the first thread flank **341** of each thread convolution **34** faces the head **32.** The second thread flank **342** of each thread convolution **34** faces the drill portion **33.** A fifth vertical distance **D5** defined between the first thread root **344** and the baseline **R is** different from a sixth vertical distance **D6** defined between the second thread root **345** and the baseline **R.** A fifth flank angle **θ5** defined between the first flank section **3411** and the baseline **R** is different from a sixth flank angle **θ6** defined between the second flank section **3412** and the baseline **R.** The type of the drill portion **33** can be varied according to needs such as a dill tail, a pointed tail, and so on. Here takes that the drill portion **33** is a drill tail as an example. While the drill portion **33** drills into a workpiece **4** in a drilling operation, chips caused by drilling the workpiece **4** are allowed to pass through and enter into the accommodation groove **361** with the aid of the slots **332,** thereby moving the chips outwards quickly and accelerating the drilling operation. Further, sufficient chips are accommodated within the slots **332** whereby the screw **3** engages with the workpiece **4** tightly, and that prevents the screw **3** from being pulled out of the workpiece **4** easily.

To sum up, the screw of this invention takes an advantage that the discharging portion formed between any two adjacent ribs has two guiding surfaces respectively connected to the ribs and an accommodation groove. The thread convolutions are provided with the cutting portions. Accordingly, the ribs formed on the shank and the cutting portions are adapted to assist the thread convolutions in cutting the workpiece, thereby improving the cutting efficiency. The guiding surfaces are adapted to guide the chips into the accommodation groove, thereby moving the chips outwards quickly, reducing the screwing resistance, and increasing the screwing speed. The first thread root and the second thread root of each thread convolution respectively define different vertical distances with the baseline of the thread crest. And, the first flank section and the second flank section of each first thread flank define different flank angles with the baseline of the thread crest. The thread convolutions are provided with an asymmetric arrangement accordingly, thereby improving the cutting efficiency, attaining a tight engagement between the screw and the workpiece, and improving the pull-out resistance of the screw to prevent the screw from being pulled out of the workpiece easily. Sufficient chips are accommodated within the guiding surfaces, the accommodation groove, and the cutting portions whereby the screw engages with the workpiece tightly, and that prevents the screw from being loose or falling from the workpiece easily.

While the embodiments of this invention are shown and described, it is understood that further variations and modifications may be made without departing from the scope of this invention as defined in the appended claims.

## Claims

1. A screw (3) comprising:
a shank (31) having opposite first and second ends and defining a central axis (L);
a head (32) joined to said first end of said shank (31);
a drill portion (33) connected to said second end of said shank (31); and
a plurality of thread convolutions (34) spirally formed on said shank (31), wherein each of said plurality of thread convolutions (34) includes opposite first and second thread flanks (341, 342) extending outwards from said shank (31), a thread crest (343) formed along a junction of said first thread flank (341) and said second thread flank (342), and a plurality of cutting portions (37) formed on respective thread crests (343) corresponding to at least two of said plurality of thread convolutions (34), said thread crest (343) defining a baseline (R) perpendicular to said central axis (L) of said shank (31), said first thread flank (341) including a first flank section (3411) connected to said shank (31) and a second flank section (3412) connected to said first flank section (3411), a flank angle defined between said first flank section (3411) and said baseline (R) being different from a flank angle defined between said second flank section (3412) and said baseline (R), said first thread flank (341) and an outer periphery of said shank (31) converging at a first thread root (344), said second thread flank (342) and said outer periphery of said shank (31) converging at a second thread root (345), a vertical distance defined between said first thread root (344) and said baseline (R) being different from a vertical distance defined between said second thread root (345) and said baseline (R);
**characterized in that** a plurality of ribs (35) are formed by protruding from said outer periphery of said shank (31) and extending between said plurality of thread convolutions (34) in an extension direction, said extension direction being non-parallel to said central axis (L) of said shank (31), a discharging portion (36) being formed between any two adjacent ribs (35) and defined on said outer periphery of said shank (31), said discharging portion (36) including two guiding surfaces (362) respectively connected to said two adjacent ribs (35) and an accommodation groove (361) defined between said two guiding surfaces (362) and recessed into said outer periphery of said shank (31), with each said accommodation groove (361) extending between said plurality of thread convolutions (34) and each said guiding surface (362) being inclined towards said central axis (L) of said shank (31), thereby guiding chips caused by cutting a workpiece (4) with said plurality of ribs (35) into said accommodation groove (361) with the aid of said two guiding surfaces (362) to facilitate the removal of said chips.

2. The screw (3) according to claim 1, said first thread flank (341) of each of said plurality of thread convolutions (34) faces said head (32).

3. The screw (3) according to claim 1, said plurality of thread convolutions (34) include a first plurality of thread convolutions (34A) and a second plurality of thread convolutions (34B) formed between said first plurality of thread convolutions (34A), each said first thread flank (341A) of each of said first plurality of thread convolutions (34A) facing said head (32), each said first thread flank (341B) of each of said second plurality of thread convolutions (34B) facing said drill portion (33).

4. The screw (3) according to any one of claims 1 to 3, wherein said vertical distance defined between said first thread root (344) and said baseline (R) is greater than said vertical distance defined between said second thread root (345) and said baseline (R).

5. The screw (3) according to any one of claims 1 to 4, wherein said flank angle defined between said first flank section (3411) and said baseline (R) is greater than said flank angle defined between said second flank section (3412) and said baseline (R).

6. The screw (3) according to any one of claims 1 to 5, wherein said drill portion (33) has a drill body (331) connected to said second end of said shank (31) and two opposite slots (332) recessedly formed on said drill body (331), said two slots (332) being each communicated with each said accommodation groove (361) of each said discharging portion (36), thereby guiding chips caused by cutting said workpiece (4) with said drill portion (33) into said accommodation groove (361) with the aid of said two slots (332).

7. The screw (3) according to any one of claims 1 to 6, wherein each of said plurality of cutting portions (37) has at least one first notch (371) and a plurality of second notches (372) formed on two sides of each of said at least one first notch (371), each of said at least one first notch (371) being recessed into said thread crest (343), each said first notch (371) thereby defining two cutting edges (373).

8. The screw (3) according to claim 7, wherein said plurality of cutting portions (37) are spaced from each other, said at least one first notch (371) being curved in shape.

## Patentansprüche

1. - Schraube (3), umfassend:
einen Schaft (31), der ein gegenüberliegendes erstes und zweites Ende aufweist und eine Mittelachse (L) definiert;
einen Kopf (32), der mit dem ersten Ende des Schafts (31) verbunden ist;
einen Bohrabschnitt (33), der mit dem zweiten Ende des Schafts (31) verbunden ist; und
eine Vielzahl von Gewindegängen (34), die spiralförmig an dem Schaft (31) sind, wobei jeder der Vielzahl von Gewindegängen (34) eine gegenüberliegende erste und zweite Gewindeflanke (341, 342) beinhaltet, die sich von dem Schaft (31) nach außen erstrecken, einen Gewindekamm (343), der entlang einer Verbindungsstelle der ersten Gewindeflanke (341) und der zweiten Gewindeflanke (342) gebildet ist, und eine Vielzahl von Schneidabschnitten (37), die an jeweiligen Gewindekämmen (343) gebildet sind, die mindestens zwei der Vielzahl von Gewindegängen (34) entsprechen, wobei der Gewindekamm (343) eine Basislinie (R) definiert, die senkrecht zu der Mittelachse (L) des Schafts (31) ist, wobei die erste Gewindeflanke (341) einen ersten Flankenabschnitt (3411), der mit dem Schaft (31) verbunden ist, und einen zweiten Flankenabschnitt (3412), der mit dem ersten Flankenabschnitt (3411) verbunden ist, beinhaltet, wobei ein Flankenwinkel, der zwischen dem ersten Flankenabschnitt (3411) und der Basislinie (R) definiert ist, verschieden ist von einem Flankenwinkel, der zwischen dem zweiten Flankenabschnitt (3412) und der Basislinie (R) definiert ist, die erste Gewindeflanke (341) und ein Außenumfang des Schafts (31) an einem ersten Gewindegrund (344) zusammenlaufen, die zweite Gewindeflanke (342) und der Außenumfang des Schafts (31) an einem zweiten Gewindegrund (345) zusammenlaufen, ein vertikaler Abstand, der zwischen dem ersten Gewindegrund (344) und der Basislinie (R) definiert ist, sich von einem vertikalen Abstand unterscheidet, der zwischen dem zweiten Gewindegrund (345) und der Basislinie (R) definiert ist;
**dadurch gekennzeichnet, dass** eine Vielzahl von Rippen (35) durch Hervorstehen aus dem Außenumfang des Schafts (31) gebildet sind und sich zwischen der Vielzahl von Gewindegängen (34) in einer Erstreckungsrichtung erstrecken, wobei die Erstreckungsrichtung nicht parallel zu der Mittelachse (L) des Schafts (31) ist, zwischen jeweils zwei benachbarten Rippen (35) ein Ausleitungsabschnitt (36) gebildet ist und an dem Außenumfang des Schafts (31) definiert ist, der Ausleitungsabschnitt (36) zwei Führungsflächen (362) beinhaltet, die jeweils mit den zwei benachbarten Rippen (35) verbunden sind, und eine Aufnahmenut (361), die zwischen den zwei Führungsflächen (362) definiert ist und in dem Außenumfang des Schafts (31) ausgespart ist, wobei sich jede Aufnahmenut (361) zwischen der Vielzahl von Gewindegängen (34) erstreckt und jede Führungsfläche (362) zu der Mittelachse (L) des Schafts (31) hin geneigt ist, wodurch Späne, die durch Schneiden eines Werkstücks (4) mit der Vielzahl von Rippen (35) verursacht werden, mittels der zwei Führungsflächen (362) in die Aufnahmenut (361) geführt werden, um das Entfernen der Späne zu erleichtern.

2. - Schraube (3) nach Anspruch 1, wobei die erste Gewindeflanke (341) jedes der Vielzahl von Gewindegängen (34) dem Kopf (32) zugewandt ist.

3. - Schraube (3) nach Anspruch 1, wobei die Vielzahl von Gewindegängen (34) eine erste Vielzahl von Gewindegängen (34A) und eine zweite Vielzahl von Gewindegängen (34B) beinhaltet, die zwischen der ersten Vielzahl von Gewindegängen (34A) gebildet sind, wobei jede erste Gewindeflanke (341A) jedes der ersten Vielzahl von Gewindegängen (34A) dem Kopf (32) zugewandt ist, wobei jede erste Gewindeflanke (341B) jedes der zweiten Vielzahl von Gewindegängen (34B) dem Bohrabschnitt (33) zugewandt ist.

4. - Schraube (3) nach einem der Ansprüche 1 bis 3, wobei der vertikale Abstand, der zwischen dem ersten Gewindegrund (344) und der Basislinie (R) definiert ist, größer ist als der vertikale Abstand, der zwischen dem zweiten Gewindegrund (345) und der Basislinie (R) definiert ist.

5. - Schraube (3) nach einem der Ansprüche 1 bis 4, wobei der Flankenwinkel, der zwischen dem ersten Flankenabschnitt (3411) und der Basislinie (R) definiert ist, größer ist als der Flankenwinkel, der zwischen dem zweiten Flankenabschnitt (3412) und der Basislinie (R) definiert ist.

6. - Schraube (3) nach einem der Ansprüche 1 bis 5, wobei der Bohrabschnitt (33) einen Bohrkörper (331) aufweist, der mit dem zweiten Ende des Schafts (31) verbunden ist, und zwei gegenüberliegende Schlitze (332), die ausgespart an dem Bohrkörper (331) gebildet sind, die zwei Schlitze (332) jeweils mit jeder Aufnahmenut (361) jedes Ausleitungsabschnitts (36) in Verbindung sind, wodurch Späne, die durch Schneiden des Werkstücks (4) mit dem Bohrabschnitt (33) verursacht werden, mittels der zwei Schlitze (332) in die Aufnahmenut (361) geführt werden.

7. - Schraube (3) nach einem der Ansprüche 1 bis 6, wobei jeder der Vielzahl von Schneidabschnitten (37) mindestens eine erste Kerbe (371) und eine Vielzahl von zweiten Kerben (372) aufweist, die auf zwei Seiten jeder der mindestens einen ersten Kerbe (371) gebildet sind, jede der mindestens einen ersten Kerbe (371) in dem Gewindekamm (343) ausgespart ist, wodurch jede erste Kerbe (371) zwei Schneidkanten (373) definiert.

8. - Schraube (3) nach Anspruch 7, wobei die Vielzahl von Schneidabschnitten (37) voneinander beabstandet sind, wobei die mindestens eine erste Kerbe (371) von gekrümmter Form ist.

## Revendications

1. - Vis (3) comprenant :
une tige (31) ayant des première et seconde extrémités opposées et définissant un axe central (L) ;
une tête (32) reliée à ladite première extrémité de ladite tige (31) ;
une partie de perçage (33) reliée à ladite seconde extrémité de ladite tige (31) ; et
une pluralité de circonvolutions de filet (34) formées en spirale sur ladite tige (31), chacune de ladite pluralité de circonvolutions de filet (34) comprenant des premier et second flancs de filet (341, 342) opposés s'étendant vers l'extérieur à partir de ladite tige (31), et une crête de filet (343) formée le long d'une jonction dudit premier flanc de filet (341) et dudit second flanc de filet (342), et une pluralité de parties coupantes (37) formées sur des crêtes de filet (343) respectives correspondant à au moins deux de ladite pluralité de circonvolutions de filet (34), ladite crête de filet (343) définissant une ligne de base (R) perpendiculaire audit axe central (L) de ladite tige (31), ledit premier flanc de filet (341) comprenant une première section de flanc (3411) reliée à ladite tige (31) et une seconde section de flanc (3412) reliée à ladite première section de flanc (3411), un angle de flanc défini entre ladite première section de flanc (3411) et ladite ligne de base (R) étant différent d'un angle de flanc défini entre ladite seconde section de flanc (3412) et ladite ligne de base (R), ledit premier flanc de filet (341) et une périphérie extérieure de ladite tige (31) convergeant vers un premier fond de filet (344), ledit second flanc de filet (342) et ladite périphérie extérieure de ladite tige (31) convergeant vers un second fond de filet (345), une distance verticale définie entre ledit premier fond de filet (344) et ladite ligne de base (R) étant différente d'une distance verticale définie entre ledit second fond de filet (345) et ladite ligne de base (R) ;
**caractérisée par le fait qu'**une pluralité de nervures (35) sont formées en faisant saillie à partir de ladite périphérie extérieure de ladite tige (31) et en s'étendant entre ladite pluralité de circonvolutions de filet (34) dans une direction d'extension, ladite direction d'extension étant non parallèle audit axe central (L) de ladite tige (31), une partie d'évacuation (36) étant formée entre toute paire de nervures (35) adjacentes et définie sur ladite périphérie extérieure de ladite tige (31), ladite partie d'évacuation (36) comprenant deux surfaces de guidage (362) respectivement reliées auxdites deux nervures (35) adjacentes et une rainure de réception (361) définie entre lesdites deux surfaces de guidage (362) et renfoncée dans ladite périphérie extérieure de ladite tige (31), avec chaque rainure de réception (361) précitée s'étendant entre ladite pluralité de circonvolutions de filet (34) et chaque surface de guidage (362) précitée étant inclinée vers ledit axe central (L) de ladite tige (31), guidant ainsi des copeaux causés par découpe d'une pièce de travail (4) avec ladite pluralité de nervures (35), jusque dans ladite rainure de réception (361) à l'aide desdites deux surfaces de guidage (362) pour faciliter l'enlèvement desdits copeaux.

2. - Vis (3) selon la revendication 1, dans laquelle ledit premier flanc de filet (341) de chacune de ladite pluralité de circonvolutions de filet (34) fait face à ladite tête (32).

3. - Vis (3) selon la revendication 1, dans laquelle ladite pluralité de circonvolutions de filet (34) comprennent une première pluralité de circonvolutions de filet (34A) et une seconde pluralité de circonvolutions de filet (34B) formées entre ladite première pluralité de circonvolutions de filet (34A), chaque premier flanc de filet (341A) précité de chacune de ladite première pluralité de circonvolutions de filet (34A) faisant face à ladite tête (32), chaque premier flanc de filet (341B) précité de chacune de ladite seconde pluralité de circonvolutions de filet (34B) faisant face à ladite partie de perçage (33).

4. - Vis (3) selon l'une quelconque des revendications 1 à 3, dans laquelle ladite distance verticale définie entre ledit premier fond de filet (344) et ladite ligne de base (R) est supérieure à ladite distance verticale définie entre ledit second fond de filet (345) et ladite ligne de base (R).

5. - Vis (3) selon l'une quelconque des revendications 1 à 4, dans laquelle ledit angle de flanc défini entre ladite première section de flanc (3411) et ladite ligne de base (R) est supérieur audit angle de flanc défini entre ladite seconde section de flanc (3412) et ladite ligne de base (R).

6. - Vis (3) selon l'une quelconque des revendications 1 à 5, dans laquelle ladite partie de perçage (33) a un corps de perçage (331) relié à ladite seconde extrémité de ladite tige (31) et deux fentes (332) opposées formées renfoncées sur ledit corps de perçage (331), lesdites deux fentes (332) étant chacune en communication avec chaque rainure de réception (361) précitée de chaque partie d'évacuation (36) précitée, guidant ainsi des copeaux causés par découpe de ladite pièce (4) avec ladite partie de perçage (33) jusque dans ladite rainure de réception (361) à l'aide desdites deux fentes (332).

7. - Vis (3) selon l'une quelconque des revendications 1 à 6, dans laquelle chacune de ladite pluralité de parties coupantes (37) a au moins une première encoche (371) et une pluralité de secondes encoches (372) formées sur deux côtés de chacune de ladite au moins une première encoche (371), chacune de ladite au moins une première encoche (371) étant renfoncée dans ladite crête de filet (343), chaque première encoche (371) précitée définissant ainsi deux arêtes coupantes (373).

8. - Vis (3) selon la revendication 7, dans laquelle ladite pluralité de parties coupantes (37) sont espacées les unes des autres, ladite au moins une première encoche (371) étant de forme incurvée.
